# EUROPÄISCHE PATENTSCHRIFT

(11) **EP 1 740 976 B1**
(45) Veröffentlichungstag und Bekanntmachung des Hinweises auf die Patenterteilung: **25.02.2015**
(21) Anmeldenummer: 05737991.9
(22) Anmeldetag: 09.04.2005
(51) Int. Cl.: G01T 3/00

(54) **DOSIMETER ZUR ERFASSUNG VON NEUTRONENSTRAHLUNG**
DOSIMETER FOR THE DETECTION OF NEUTRON RADIATION
DOSIMETRE CONCU POUR DETECTER UN RAYONNEMENT NEUTRONIQUE

(30) Priorität: 22.04.2004 DE 102004020979
(43) Veröffentlichungstag der Anmeldung: 10.01.2007
(73) Patentinhaber: GSI Helmholtzzentrum für Schwerionenforschung GmbH, 64291 Darmstadt (DE)
(72) Erfinder: FEHRENBACHER, Georg, 64367 Mühltal (DE); FESTAG, Johannes, Georg, 64342 Seeheim-Jugenheim (DE); GUTERMUTH, Frank, 64625 Bensheim (DE); RADON, Torsten, 61239 Ober-Mörlen (DE)
(74) Vertreter: Blumbach Zinngrebe
(86) Internationale Anmeldenummer: PCT/EP2005/003745
(87) Internationale Veröffentlichungsnummer: WO 2005/106532

(56) Entgegenhaltungen:
- DE-C1- 19 627 264
- US-A- 2 920 204
- US-A- 3 792 280
- US-A- 3 885 159
- US-A- 4 757 202
- US-A- 4 874 951
- US-A- 5 578 830
- US-B1- 6 362 485
- US-E- R E35 908

## Beschreibung

Die Erfindung betrifft ein Dosimeter zur Erfassung von Neutronen-strahlung im Energiebereich von 0.025 eV bis einige hundert GeV.

Beschleunigeranlagen für Forschungszwecke und zur Nutzung im industriellen und medizinischen Umfeld werden dazu verwendet, Teilchen auf sehr hohe Energien zu beschleunigen. Beispielsweise werden in modernen Schwerionenbeschleunigern Ionen bis auf Energien von einigen hundert GeV beschleunigt. Diese hochenergetischen Ionen produzieren Sekundärstrahlung, nämlich geladene Teilchen und Neutronen, wenn sie mit Materie in Wechselwirkung treten. Das Energiespektrum der erzeugten Neutronen reicht von 0.025 eV bis zu einigen hundert GeV, da die maximale Energie der erzeugten Neutronen denselben Energiebereich wie die primäre Ionenstrahlung aufweisen kann. Für den Strahlenschutz ist es notwendig, die erzeugten Neutronen zu erfassen, um Strahlenschutzmaßnahmen, insbesondere Abschirmungen, so zu dimensionieren, dass vorgegebene Grenzwerte eingehalten werden können. Da hochenergetische Neutronen eine große mittlere Weglänge in Materie haben, können sie auch sehr starke Abschirmungen durchdringen. Deshalb ist es-insbesondere bei Schwerionentherapieanlagen - notwendig und von großer Bedeutung, die Neutronenintensitäten zu messen und zu überwachen (Umgebungsüberwachung). Für die Strahlenschutzüberwachung ist es wichtig, Dosimeter zum Nachweis von Neutronenstrahlung zu entwickeln, die im gesamten Energiebereich der Neutronenstrahlung vom Bereich thermischer Neutronen (0.025 eV) bis zu Energien von mehreren hundert GeV verwendet werden können. Hier eingesetzte Dosimeter weisen einen Grundkörper aus einem wasserstoffhaltigen Material auf, der im Wesentlichen kugelförmig ist. Im Zentrum des Grundkörpers ist ein Detektionselement angeordnet, das die einfallende Strahlung erfasst.

Aus der Patentschrift DE 196 27 264 C1 geht ein Neutronendosisleistungsmesser zur Messung der Neutronenäquivalentdosis hervor, welches einen Innenmoderator, einen Cadmiumabsorber und einen äußeren kugelförmigen Moderator aufweist.

Das Patent US 3,792,280 zeigt ein Neutronenspektrometer mit einer Vielzahl von Polyethylenstäben, die in einer Polyethylenkugel radial angeordnet sind.

Um auch Neutronenstrahlung mit sehr hoher Energie detektieren zu können, ist ein Neutronenkonverter vorgesehen, der Metallatome umfasst. Diese setzen die zu erfassenden Neutronen um in verlangsamte Neutronen, die in einem geeigneten Energiebereich von 0.025 eV bis 1 keV liegen, so dass diese von dem Detektionselement registriert werden können. Zur Auswertung der erfassten Strahlung muss das Detektionselement ausgebaut werden. Es hat sich herausgestellt, dass der Aufbau herkömmlicher Dosimeter komplex ist und damit die Umgebungsüberwachung nur unter relativ hohen Kosten möglich ist.

Aufgabe der Erfindung ist es daher, ein Dosimeter zur Erfassung von Neutranenstrahlung zu schaffen, das einfach aufgebaut ist und damit eine kostengünstige umgebungsüberwachung, das heisst eine dosimetrische Abschätzung der Neutronenstrahlung erlaubt.

Zur Lösung dieser Aufgabe wird ein Dosimeter vorgeschlagen, das die in Anspruch 1 genannten Merkmale aufweist. Das Dosimeter weist einen im Wesentlichen kugelförmigen Grundkörper auf, in dessen Zentrum ein Detektionselement untergebracht ist. Es wird von einem Neutronenkonverter mit Metallatomen umgeben. Das Dosimeter zeichnet sich dadurch aus, dass der Grundkörper einen Zugang aufweist, durch den das Detektionselement erreichbar ist. Es kann auf diese Weise in den Neutronenkonverter eingebracht und aus diesem entnommen werden. Ferner ist das Dosimeter dadurch gekennzeichnet, dass das Detektionselement mindestens ein speicherndes Element und mindestens ein registrierendes Element umfasst, wobei das registrieren Element Neutronen in geladene Teilchen umwandelt, die von dem Speichernden. Schließlich ist der Zugang für einen Einsatz des Dosimeters mit einem Verschluss versehen, der dasselbe Material wie der Grundkörper aufweist. Der Neutronenkonverter ist vorzugsweise zylindrisch ausgebildet, so dass das Detektionselement leicht zugänglich ist.

Weitere Ausgestaltungen ergeben sich aus den Unteransprüchen.

Die Erfindung wird im Folgenden anhand der Zeichnung näher erläutert. Es zeigen:
- Figur 1: eine Prinzipskizze eines ersten Ausführungsbeispiels eines Dosimeters im Querschnitt und
- Figur 2: eine Prinzipskizze eines Beispiels eines Dosimeters in perspektivischer Ansicht.

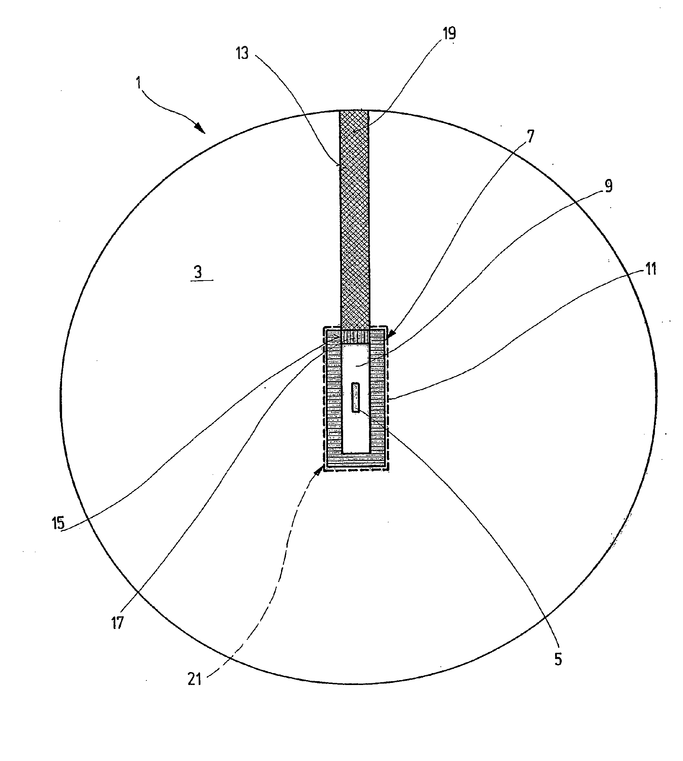

Aus Figur 1 ist ein Ausführungsbeispiel eines Dosimeters 1 ersichtlich, das einen im wesentlichen kugelförmigen Grundkörper 3 umfasst. Beispielhaft kann aber auch, ein polyederförmiger Grundkörper verwendet werden, dessen Außenfläche sich also aus einer Vielzahl von ebenen Bereichen zusammensetzt. Entscheidend ist, dass der Grundkörper 3 vorzugsweise so aufgebaut ist, dass er ein im Wesentlichen gleichartiges Moderationsverhalten für Strahlung aus unterschiedlichen Raumrichtungen zeigt.

Der Grundkörper dient also als Moderationskörper und weist eine wasserstoffhaltige Substanz auf. Vorzugsweise ist er aus dieser hergestellt. Als Grundmaterial können wasserstoffhaltige Kunststoffe, insbesondere Polyäthylen (PE), und/oder Polymethylmethacrylat (PMMA) eingesetzt werden, aber auch Wasser und dergleichen.

Im Zentrum des Grundkörpers 3 ist ein Detektionselement 5 vorgesehen, das mindestens ein speicherndes und mindestens ein registrierendes Element umfasst. Es dient dazu, den Grundkörper 3 durchdringende Strahlung zu erfassen. Das Detektionselement 5 wird von einem Neutronenkonverter 7 umgeben, der im Wesentlichen zylindrisch ausgebildet ist und das Detektionselement 5 umgibt. Der Neutronenkonverter 7 schließt auch einen Füllkörper 9 ein, in den das Detektionselement 5 eingebettet ist. Es wird vorzugsweise in einem in den Füllkörper 9 eingebrachten Schlitz untergebracht, um einen einfachen Austausch zu ermöglichen.

Auch der Füllkörper 9 kann als Moderationskörper ausgebildet sein und eine wasserstoffhaltige Substanz der oben angesprochenen Art umfassen oder aus dieser bestehen.

Der Neutronenkonverter 7 weist eine Wandung 11 auf, die Metallatome umfasst, die eine Kernladungszahl Z > 15, vorzugsweise Z > 20, aufweisen. Die Wandung kann Titan-, Chrom-, Vanadium-, Eisen-, Kupfer-, Wolfram-, Blei- und/oder Wismut-Atome umfassen. Wesentlich ist, dass die Metallatome stabil im Sinne der Radioaktivität sind. Denkbar ist es, dass Metallatome unterschiedlicher Kernladungszahl in der Wandung 11 vorgesehen sind. Auch ist es möglich, Metallatome von Legierungen einzusetzen.

Vorzugsweise weist der Neutronenkonverter mindestens zwei Schichten mit Metallatomen unterschiedlicher Kernladungszahl Z auf, wobei die Schichten so strukturiert sein können, dass im Wesentlichen jeweils pro Schicht nur Metallatome einer bestimmten Kernladungszahl vorgesehen sind.

Bevorzugt werden die Schichten so ausgewählt und orientiert, dass diese von der der Neutronenstrahlung zugewandten Seite des Dosimeters aus gesehen Metallatome mit absteigender Kernladungszahl enthalten.

Denkbar ist es auch, dass mindestens eine der Schichten als Metallfolie, vorzugsweise als gewalzte Metallfolie, oder als mit Metall bedampfte Polymerfolie ausgebildet ist.

Die Folge der Schichten mit Metallatomen unterschiedlicher Kernladungszahl ist vorzugsweise an das Energiespektrum der Neutronenstrahlung angepasst, die von dem Detektionselement 5 erfasst werden soll.

Bei einem besonders bevorzugten Ausführungsbeispiel besteht die Wandung 11 des Neutronenkonverters 7 aus Blei mit einer Dicke von 0.5 bis 2.0 cm. Der Neutronenkonverter 7 weist vorzugsweise eine Höhe von 8.0 bis 15 cm und einen Außendurchmesser von 1.0 bis 5.0 cm auf.

In den Grundkörper 3 des Dosimeters 1 ist ein Zugang 13 eingebracht, der beispielsweise als Bohrung realisiert ist. Über diesen ist das Detektionselement 5 in das Innere des Dosimeters 1, hier des Neutronenkonverters 7 einbringbar. Er dient auch der Entnahme des Detektionselements 5 zu dessen Auswertung.

Im Übergangsbereich zwischen dem Zugang 13 und dem Neutronenkonverter 7 ist eine Öffnung 15 vorgesehen, über die das Innere des Neutronenkonverters 7 zugänglich ist. Vorzugsweise ist der Füllkörper 9 so ausgebildet, dass er im Bereich der Öffnung 15 Metallatome umfasst, so dass quasi ein Deckel 17 realisiert wird, der wie die Wandung 11 des Neutronenkonverters 7 aufgebaut ist.

Der Zugang 13 ist bei Einsatz des Dosimeters 1 mit einem Verschlusskörper 19 versehen, der diesen vorzugsweise vollständig ausfüllt. Der Verschlusskörper 19 weist vorzugsweise dasselbe Material wie der Grundkörper 3 auf oder ist aus diesem hergestellt, um im Bereich des Zugangs 13 einfallende Strahlung, wie im Bereich des übrigen Grundkörpers 3, einer Moderation zu unterwerfen.

Aus Figur 1 ist noch ersichtlich, dass zusätzlich ein Neutronenabsorber 21 vorgesehen werden kann, der zwischen Grundkörper 3 und Detektionselement 5 angeordnet ist. Bei dem hier dargestellten Ausführungsbeispiel ist der Neutronenabsorber 21 außen auf dem Neutronenkonverter 7 als Absorptionsschicht realisiert und gestrichelt angedeutet.

Grundsätzlich ist es aber auch möglich, den Neutronenabsorber 21 im Inneren des Neutronenkonverters 7, beispielsweise auf dessen Innenwandung, vorzusehen.

Der Neutronenabsorber 21 umfasst vorzugsweise Bor-Atome. Es können aber auch stattdessen oder zusätzlich Cadmium-Atome vorgesehen werden.

Der Neutronenabsorber 21 kann auch mehrere Schichten aufweisen, die außen oder innen auf der Wandung 11 des Neutronenkonverters 7 vorgesehen sind.

Das Detektionselement 5 kann mindestens ein speicherndes und mindestens ein registrierendes Element umfassen, wobei vorzugsweise mindestens eines der Elemente als passives Element ausgelegt ist. Das Detektionselement 5 ist so ausgelegt, dass das mindestens eine registrierende Element die Neutronen in geladene Teilchen umwandelt, die dann von dem mindestens einen speichernden Element erfasst werden.

Das speichernde Element ist beispielsweise ein anorganischer Kristall, vorzugsweise ein Thermolumineszenzkristall. Vorzugsweise wird ein LiF-Kristall verwendet. Das speichernde Element kann auch als Kernspurdetektor ausgelegt sein und vorzugsweise ein organisches Hochpolymer, insbesondere Makrofol oder CR39, umfassen. Schließlich ist es auch möglich, für das speichernde Element ein anorganisches Glas und/oder ein organisches Kristall einzusetzen.

Das speichernde Element kann auch als aktives Element ausgelegt sein und einen Halbleiter, vorzugsweise Silizium, umfassen. Insbesondere kann ein Festkörperspeicherelement, vorzugsweise ein MOSFET-Transistor, eingesetzt werden.

Das registrierende Element des Detektionselements 5 weist vorzugsweise in einer dünnen Schicht angeordnete ⁶Li- und/oder ¹⁰B- und/oder ^{153,155,157}Gd-Atome auf.

Das Dosimeter 1 kann als speicherndes Element des Detektionselements 5 ein Festkörperspeicherelement, vorzugsweise einen modifizierten MOSFET-Transistor, der in einem Gehäuse angeordnet ist, umfassen. Hierbei weist das Gehäuse an der dem Festkörperspeicherelement zugewandten Seite, also an seiner Innenseite, eine -vorzugsweise als dünne Schicht ausgelegte- ¹⁰B- und/oder ⁶Li- und/oder ^{153,155,157}Gd-Atome aufweisende Verbindung auf, die als registrierende Schicht dient. Diese Schicht stellt eine für verlangsamte (thermalisierte) Neutronen sensitive Schicht dar. Der Zwischenraum zwischen Gehäuse und Festkörperspeicherelement ist mit einem Gas gefüllt. Das hier verwendete Festkörperspeicherelement weist im Gegensatz zu herkömmlichen Festkörperspeicherelementen (EEPROM-Speicherelemente) an der der Umgebung zugewandten Seite der Oxidschicht des EEPROM's eine Öffnung auf, so dass dessen potentialfreies Gate mit dem umgebenden Gas in direktem Kontakt steht. Die an der den MOSFET-Transistor umgebenden Gehäusewand angebrachte Schicht erzeugt, wenn in das Detektionselement Neutronen treffen, geladene Teilchen. Diese werden von dem Festkörperspeicherelement registriert und gespeichert. Durch Wahl unterschiedlicher Materialien für die Schicht kann die Neutronensensitivität des Dosimeters für verschiedene Anforderungen eingestellt werden.

Das speichernde und das registrierende Element können durch Neutroneneinfang zu aktivierende Atome umfassen, vorzugsweise Gold und/oder Silber und/oder Cadmium.

Im Folgenden soll auf die Funktion und auf den Einsatz des Dosimeters 1 näher eingegangen werden.

Das Dosimeter 1 wird an Orten angeordnet, an denen Neutronenstrahlung erfasst und registriert werden soll, beispielsweise zur Umgebungsüberwachung von Hochenergiebeschleunigern. Aufgrund des Aufbaus des Dosimeters 1 ist es möglich, eine Neutronenstrahlung mit Neutronen unterschiedlichster Energie auszuwerten, also thermische Neutronen mit 0.025 eV aber auch Neutronen mit mehreren hundert GeV. Bei Versuchen hat sich herausgestellt, dass Kugeln mit einem Durchmesser von 20 bis 35 cm, die aus Polyäthylen bestehen, besonders gut als Grundkörper 3 verwendbar sind, wobei der Neutronenkonverter 7 eine Wandung 11 aufweist, die vorzugsweise aus 0,5 bis 2,0 cm dickem Metall, insbesondere Blei, besteht, und ein Füllkörper 9 vorgesehen ist.

Thermische und langsame Neutronen diffundieren durch den Grundkörper 3 des Dosimeters bis zum Detektionselement 5 und lösen dort eine exotherme Reaktion aus. Die Dicke des Grundkörpers 3, damit also die Dicke des Moderationskörpers, muss so angepasst sein, dass einerseits eine ausreichend hohe Empfindlichkeit des Detektionselements 5 für diese Neutronen vorhanden ist, andererseits muss aber eine zu hohe Empfindlichkeit für intermediäre Neutronen, also für Neutronen mittlerer Energie, vermieden werden. Dies kann vorzugsweise dadurch erreicht werden, dass das Dosimeter 1 einen Neutronenabsorber 21 umfasst, der vorzugsweise ¹⁰Bor-Atome beziehungsweise ¹⁰Bor-haltige Materialien umfasst.

Schnelle Neutronen müssen zuerst in dem als Moderationskörper dienenden Grundkörper 3 des Dosimeters 1 abgebremst werden, bevor sie im Detektionselement 5 registriert werden können. Der Gesamtdurchmesser des Dosimeters ist dabei maßgebend für das Maximum der Nachweiskurve für eine bestimmte Neutronenenergie im Bereich dieser schnellen Neutronen.

Sehr schnelle Neutronen, also Neutronen im Energiebereich von > 10 MeV, sind dadurch erfassbar, dass ein Metallatome aufweisender Neutronenkonverter 7 vorgesehen ist. Neutronen, die auf ein Metallatom mit vielen Nukleonen im Neutronenkonverter 7 treffen, führen zu einer Spallation, also zur Abdampfung von Protonen und Neutronen. Es bildet sich eine intranukleare Kaskade im Kern der Metallatome, bei der außer Protonen auch Neutronen emittiert werden, deren Energie geringer ist, als die der auf das Dosimeter 1 auftreffenden Neutronen. Die Energie der dabei entstehenden Neutronen liegt im MeV-Bereich. Je nach Energie der entstehenden Neutronen ist es möglich, diese direkt mittels des Detektionselements 5 zu erfassen oder aber nach einer Moderation der Neutronen im Füllkörper 9.

Im Bereich des Neutronenkonverters 7 kann es auch zu einer Fragmentation dadurch kommen, dass Neutronen auf die Kerne der Metallatome in der Wandung 11 des Neutronenkonverters 7 treffen. Diese zerfallen in mehrere Kerne und führen anschließend zu einem Verdampfungsprozess von Teilchen. Dabei werden wiederum Neutronen erzeugt, wobei deren Energie geringer ist als die Energie der auf das Dosimeter 1 auftreffenden Neutronen.

Insgesamt wird deutlich, dass für hochenergetische Neutronen der Neutronenkonverter 7 wesentlich ist, weil er dazu führt, dass Neutronen hoher Energie konvertiert werden in verlangsamte (thermalisierte) Neutronen in einem geeigneten Energiebereich, so dass diese von dem Detektionselement 5 direkt oder nach einer Moderation im Füllkörper 9 erfasst werden können.

Das hier beschriebene Dosimeter 1 zeichnet sich dadurch aus, dass Neutronen in sehr unterschiedlichen Energiebereichen erfasst werden können. Die Empfindlichkeit für Neutronen bestimmter Energie kann durch die Wahl der Dicke des als Moderationskörpers dienenden Grundkörpers 3 bestimmt werden, aber auch durch die Wahl des Materials, das der Grundkörper 3 enthält oder aus dem dieser hergestellt ist. Entscheidend ist außerdem die Dicke der Wandung 11 des Neutronenkonverters 7. Überdies spielt auch das Material des Füllkörpers 9 eine Rolle bei der Abstimmung des Dosimeters 1 auf die Erfassung von Neutronen einer bestimmten Energie.

Schließlich kann noch eine optimierende Absorberschicht, der Neutronenabsorber 21, für langsame Neutronen vorgesehen werden, dessen Schichtstärke auf die Energie der zu erfassenden Neutronen abstimmbar ist. Bei einer bestimmten Dicke des Neutronenabsorbers 21 können in diesen auch Löcher eingebracht werden. Vorzugsweise machen die Löcher etwa 10% bis 30% der Oberfläche des Neutronenabsorbers 21 aus.

Das Dosimeter 1 der hier beschriebenen Art dient nach allem dazu, Neutronen in einem weiten Energiebereich zu erfassen. Es kann auch dazu herangezogen werden, eine Neutronenstrahlung in gemischten Strahlungsfeldern zu detektieren, in denen also Photonen-, Neutronen- und Elektronenstrahlungen vorhanden sind. In diesem Fall werden für das Detektionselement 5 jeweils zwei Isotope mit um mindestens einige Größenordnung verschiedenem Neutroneneinfangswirkungsquerschnitt verwendet, vorzugsweise ⁶Li- und ⁷Li-und/oder ¹⁰B- und ¹¹B-Atome und/oder ^{153,155,157}Gd und ^{156,160}Gd und/oder ²³⁵U und ²³⁹Pu aufweisende Verbindungen. Beispielsweise sind die Wirkungsquerschnitte für ¹⁰B und ¹¹B um sechs Größenordnungen (3840 barn, 5 mbarn) verschieden.

Die Ermittlung der Neutronenstrahlung in gemischten Strahlungsfeldern erfolgt mittels eines Differenzverfahrens. Unter Differenzverfahren ist in diesem Zusammenhang zu verstehen, dass die gemessenen Strahlungsintensitäten mindestens zweier Detektionselemente subtrahiert werden. Hierbei sind die Detektionselemente so gewählt, dass beide die gesamte Strahlungintensität messen, wobei allerdings das eine empfindlich auf verlangsamte Neutronen reagiert und das andere nicht empfindlich auf verlangsamte Neutronen reagiert. Somit ergibt sich nach der Subtraktion der gemessenen Strahlungsintensitäten die Strahlungsintensität der Neutronenstrahlung. Besonders bevorzugt werden als passive Elemente eines Detektionselements 5 ⁶LiF- und ⁷LiF-Kristalle zur Verwirklichung von Thermolumineszenz-Detektoren.

Als besonders vorteilhaft hat es sich herausgestellt, dass das Dosimeter 1 als passives Dosimeter ausgebildet werden kann und dass dabei auch Strahlungsfelder überwacht werden können, die eine gepulste Strahlung aufweisen, wobei die Strahlung Neutronen in einem sehr großen Energiebereich (0.025 eV bis einige hundert GeV) umfasst. Durch den Aufbau des Dosimeters 1 wird sichergestellt, dass die Messung der Strahlungsdosis praktisch richtungsunabhängig geschieht.

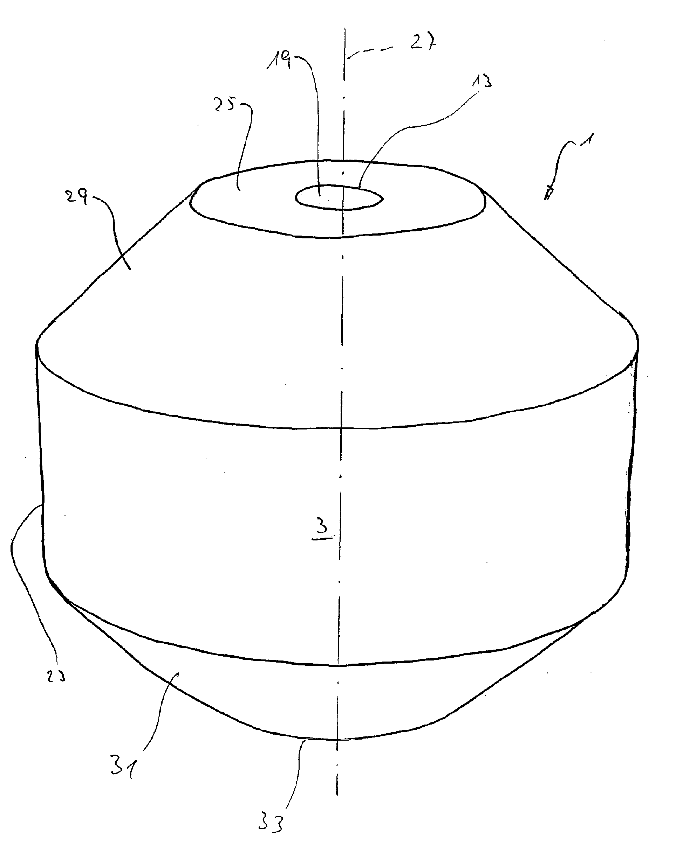

Figur 2 zeigt in perspektivischer Ansicht ein weiteres Beispiel eines Dosimeters 1. Es ist identisch aufgebaut wie das anhand von Figur 1 erläuterte, sodass auf die vorangegangene Beschreibung des Dosimeters 1 verwiesen wird. Auch ist dessen Funktion identisch.

Der einzige Unterscheid besteht darin, dass der Grundkörper 3 hier nicht kugelförmig ausgebildet ist. Seine Grundform geht von einem Zylinder aus, dessen beiden Stirnflächen in ihrem Übergangsbereich zur zylindrischen Außenfläche des Grundkörpers 3 mit einer Fase versehen sind.

Es ergib sich damit ein Grundkörper, der einen zentralen im wesentlichen zylindrisch ausgebildeten ersten Abschnitt 23 aufweist, der zwei spiegelbildlich ausgebildete Enden umfasst. Das obere Ende 25 ist plan ausgebildet und bildet eine senkrecht zu einer Mittelachse 27 des Grundkörpers verlaufende kreisrunde Abschlussfläche. In diese mündet hier der Zugang 13, der anhand von Figur 1 bereits erläutert wurde. In diesen ist der Verschlusskörper 19 eingesetzt, der oben ebenfalls schon beschrieben wurde.

Das obere Ende 25 geht über einen konischen zweiten Abschnitt 29 in den zylindrischen ersten Abschnitt 23 über.

Entsprechend schließt sich an den zylindrischen ersten Abschnitt 23 ein entgegengesetzt zum zweiten Abschnitt 29 orientierter und ausgebildeter konischen dritter Abschnitt 31 an, der sich, ausgehend vom zylindrischen ersten Abschnitt 23, nach unten verjüngt und der an ein unteres Ende 33 angrenzt. Dieses wird durch eine kreisförmige Abschlussfläche gebildet, auf der die Mittelachse 27 senkrecht steht. Damit verläuft das untere Ende 33 parallel zum oberen Ende 25.

Vorzugsweise wird der Grundkörper 3 des Dosimeters 1 gemäß dem Beispiel nach Figur 2 so ausgebildet, dass er in seinem Moderationsverhalten vergleichbar ist mit dem des Grundkörpers, wie er anhand des ersten Ausführungsbeispiels gemäß Figur 1 erläutert wurde. Dabei ist festzuhalten, dass die Herstellung des Grundkörpers 3 nach dem Beispiel gemäß Figur 2 relativ preiswert durchführbar ist, indem beispielsweise ein zylindrischer Ausgangskörper im Bereich seiner Enden mit einer Fase versehen wird, sodass sich konische Abschnitte ergeben, über die der zylindrische erste Abschnitt 23 in die senkrecht zur Mittelachse 27 verlaufenden Stirnseiten übergeht, die das obere Ende 25 und das untere Ende 33 bilden.

Die in Richtung der Mittelachse 27 gemessene Höhe der konischen Abschnitte 29 und 31 sowie die Höhe des zylindrischen ersten Abschnitts 23 kann im einem weiten Rahmen variiert und an gewünschte Moderationseigenschaften des Grundkörpers 3 angepasst werden. Um eine möglichst richtungsunabhängige Moderation des Grundkörpers 3 bei dem zweiten Ausführungsbeispiel nach Figur 2 zu erreichen, wird die Form des Grundkörpers 3 in groben Zügen vorzugsweise an die einer Kugel angepasst.

Der anhand von Figur 2 erläuterte Grundkörper 3 kann auch eine abweichende Kontur aufweisen. Es ist denkbar, dass der mittlere, hier zylindrische erste Abschnitt 23 eine mehr oder weniger gewölbte Außenkontur hat, die auch wesentlichen der einer Kugel im Bereich ihres Äquators entspricht. Auch die zweiten und dritten Abschnitte 29 und 33 müssen nicht exakt konisch ausgebildet sein. Es können auch mehr oder weniger gewölbte Bereiche vorgesehen werden, über die der mittlere erste Abschnitt 23 in das obere Ende 25 und das untere Ende 33 übergeht.

Im Inneren ist das Dosimeter 1 nach Figur 2 identisch aufgebaut, wie das Dosimeter 1 nach Figur 1, sodass auf die Beschreibung der hier vorhandenen Elemente gemäß Figur 1 verwiesen wird.

Die Materialien, aus denen der Grundkörper des Ausführungsbeispiels nach Figur 2 besteht, können identisch sein wie die, die für das Dosimeter 1 nach Figur 1 verwendet werden.

Daraus ergibt sich im übrigen, dass die Funktionsweise des Dosimeters 1 nach Figur 2 identisch ist mit dem, das anhand von Figur 1 erläutert wurde.

## Patentansprüche

1. Dosimeter (1) zur Erfassung von Neutronenstrahlung in einem Energiebereich von 0.025 eV bis einigen hundert GeV mit einem als Moderationskörper dienenden im Wesentlichen kugelförmigen Grundkörper (3) mit wasserstoffhaltigem Material, einem im Zentrum des Grundkörpers (3) angeordneten Detektionselement (5), mit einem das Detektionselement (5) umgebenden Neutronenkonverter (7), der Metallatome umfasst, die die Energie der zu erfassenden hochenergetischen Neutronen im Wesentlichen in Neutronen in einem geeigneten Energiebereich umsetzen,
**dadurch gekennzeichnet, dass**
der Grundkörper (3) einen Zugang (13) aufweist, der dazu eingerichtet ist, das Detektionselement in den Neutronenkonverter einzubringen und aus diesem zu entnehmen und dass
das Detektionselement (5) mindestens ein speicherndes Element und mindestens ein registrierendes Element umfasst,
wobei das registriererende Element Neutronen in geladene Teilchen umwandelt, die von dem speichernden Element erfasst werden, und
dass der Zugang (13) für einen Einsatz des Dosimeters (1) mit einem Verschlusskörper (19) versehen ist, der dasselbe Material wie der Grundkörper (3) aufweist.

2. Dosimeter (1) nach Anspruch 1,
**dadurch gekennzeichnet dass**
das mindestens eine speichernde Element als passives Element ausgelegt ist und/oder
das mindestens eine speichernde Element ein anorganischer Kristall und/oder ein Thermolumineszenzkristall, insbesondere LiF, und/oder ein Kernspurdetektor, vorzugsweise ein organisches Hochpolymer und/oder ein anorganisches Glas und/oder ein organischer Kristall ist.

3. Dosimeter (1) nach einem der vorhergehenden Ansprüche,
**dadurch gekennzeichnet, dass**
das mindestens eine speichernde Element einen Halbleiter, vorzugsweise Silizium, aufweist.

4. Dosimeter (1) nach Anspruch 3,
**dadurch gekennzeichnet,**
**dass** der Halbleiter ein Festkörperspeicherelement, vorzugsweise einen modifizierten MOSFET-Transistor, aufweist.

5. Dosimeter (1) nach einem der vorhergehenden Ansprüche,
**dadurch gekennzeichnet, dass**
das mindestens eine registrierende Element - vorzugsweise in einer dünnen Schicht angeordnete - ⁶Li-und/oder ¹⁰B-Atome aufweist und/oder dass
das mindestens eine speichernde und das mindestens eine registrierende Element durch Neutroneneinfang zu aktivierende Atome umfasst, vorzugsweise Gold und/oder Silber und/oder Cadmium.

6. Dosimeter (1) nach einem der vorhergehenden Ansprüche
**dadurch gekennzeichnet, dass**
das Detektionselement (5) zur Erfassung von Neutronenstrahlung in gemischten Strahlungsfeldern - Photonen-, Neutronen- und Elektronenstrahlung aufweisend-ein speicherndes und registrierendes Element mit jeweils
zwei Isotopen mit um mindestens einige Größenordnungen verschiedenem Neutroneneinfangswirkungsquerschnitt, vorzugsweise ⁶Li- und ⁷Li-und/oder ¹⁰B- und ¹¹B-Atome und/oder ^{153,155,157}Gd und ^{156,160}Gd aufweisende Verbindungen, umfasst.

7. Dosimeter (1) nach Anspruch 6,
**dadurch gekennzeichnet, dass**
das mindestens eine speichernde und/oder das mindestens eine registrierende Element mindestens einen ⁶LiF-Kristall und mindestens einen ⁷LiF-Kristall und/oder ¹⁰B- und ¹¹B-Atome aufweisende Verbindungen, umfasst.

8. Dosimeter (1) nach einem der vorhergehenden Ansprüche,
**dadurch gekennzeichnet, dass**
der Grundkörper (3) wasserstoffhaltiges Material, vorzugsweise Polyäthylen (PE) und/oder Polymethylmethachylat (PMMA), umfasst, vorzugsweise aus diesem aufgebaut ist.

9. Dosimeter (1) nach einem der vorhergehenden Ansprüche, **dadurch gekennzeichnet, dass**
die Größe des Grundkörpers (3) und/oder die Dicke des Neutronenkonverters (7) dem Energiespektrum der zu erfassenden Neutronenstrahlung angepasst ist.

10. Dosimeter (1) nach nach einem der vorhergehenden Ansprüche, **dadurch gekennzeichnet dass**
der Neutronenkonverter (7) zylindrisch oder zylinderförmig ausgebildet ist.

11. Dosimeter (1) nach einem der vorhergehenden Ansprüche
**dadurch gekennzeichnet, dass**
ein - vorzugsweise in einer dünnen Schicht angeordneter - Neutronenabsorber (21), vorzugsweise Bor- und/oder Cadmium-Atome umfassend, zwischen Grundkörper (3) und Detektionselement (5) angeordnet ist und/oder dass
der Neutronenabsorber (21) zwischen Grundkörper (3) und Neutronenkonverter (7) angeordnet ist oder dass
der Neutronenabsorber (21) zwischen Neutronenkonverter (7) und Detektionselement (5) angeordnet ist.

12. Dosimeter (1) nach Anspruch 11, **dadurch gekennzeichnet, dass**
der Neutronenabsorber (21) Löcher aufweist.

## Claims

1. A dosimeter (1) for the detection of neutron radiation in an energy range from 0.025 eV to approximately several hundred GeV comprising an essentially spherical main body (3) with hydrogenous material acting as a moderating body, a detection element (5) located in the center of the main body (3), with a neutron converter (7) surrounding the detection element (5), the neutron converter including metal atoms for converting the energy of the high-energy neutrons to be detected essentially into neutrons in a suitable energy range,
wherein the main body (3) has an access (13) through which the detection element can be inserted into and removed from the neutron converter and
the detection element (5) includes at least one storage element and at least one registration element
wherein the registration element converts neutrons into charged particles which are detected by the storage element, and
the access (13) is provided, for use of the dosimeter (1), with a sealing body (19) featuring the same material as the main body (3).

2. The dosimeter (1) of claim 1, wherein the at least one storage element is designed as a passive element and/or the at least one storage element is an inorganic crystal and/or a thermoluminescent crystal, specifically LiF, and/or a nucleus trace detector, preferably an organic high polymer and/or an inorganic glass and/or an organic crystal.

3. The dosimeter (1) of one of the preceding claims, wherein the at least one storage element has a semiconductor, preferably silicon.

4. The dosimeter (1) of claim 3, wherein the semiconductor has a solid-body storage element, preferably a modified MOSFET transistor.

5. The dosimeter (1) of one of the preceding claims, wherein the at least one registration element has ⁶Li and/or ¹⁰B atoms, preferably arranged in a thin layer, and/or
the at least one storage and the at least one registration element comprises atoms to be activated by capturing neutrons, preferably gold and/or silver and/or cadmium.

6. The dosimeter (1) of one of the preceding claims, wherein the detection element (5) for the detection of neutron radiation in mixed radiation fields - having photon, neutron and electron radiation - comprises a storage and registration element each with two isotopes with different neutron capture probability cross-section different by at least a few orders of magnitude, preferably compounds having ⁶Li and ⁷Li and/or ¹⁰B and ¹¹B atoms and/or ^{153,155,157}Gd and ^{156,160}Gd.

7. The dosimeter (1) of claim 6, wherein the at least one storage and/or the at least one registration element includes at least one ⁶LiF crystal and at least one ⁷LiF crystal and/or compounds having ¹⁰B and ¹¹B atoms.

8. The dosimeter (1) of one of the preceding claims, wherein the main body (3) comprises hydrogenous material, preferably polyethylene (PE) and/or polymethylmethacrylate (PMMA), is preferably constructed thereof.

9. The dosimeter (1) of one of the preceding claims, wherein the size of the main body (3) and/or the thickness of the neutron converter (7) is adapted to the energy spectrum of the neutron radiation to be detected.

10. The dosimeter (1) of one of the preceding claims, wherein the neutron converter (7) is cylindrical or cylinder-shaped.

11. The dosimeter (1) of one of the preceding claims, wherein a neutron absorber (21) preferably located in a thin layer and preferably comprising boron and/or cadmium atoms, is located between main body (3) and detection element (5), and/or
the neutron absorber (21) is positioned between main body (3) and neutron converter (7) or
the neutron absorber (21) is positioned between neutron converter (7) and detection element (5).

12. The dosimeter (1) of claim 11, wherein the neutron absorber (21) has holes.

## Revendications

1. Dosimètre (1) conçu pour détecter un rayonnement neutronique dans un domaine d'énergie allant de 0,025 eV à quelques centaines de GeV, comprenant : un corps de base (3) sensiblement sphérique servant de corps modérateur, avec une matière contenant de l'hydrogène; un élément de détection (5) disposé au centre du corps de base (3); un convertisseur de neutrons (7) qui entoure l'élément de détection (5) et comporte des atomes métalliques qui convertissent l'énergie des neutrons de haute énergie, devant être détectés, sensiblement en neutrons situés dans un domaine d'énergie approprié,
**caractérisé en ce que**
le corps de base (3) présente un accès (13) qui est conçu pour insérer l'élément de détection dans le convertisseur de neutrons et l'en retirer, et **en ce que**
l'élément de détection (5) comprend au moins un élément de stockage et au moins un élément d'enregistrement,
l'élément d'enregistrement convertissant des neutrons en particules chargées qui sont détectées par l'élément d'enregistrement, et
**en ce que** l'accès (13), en vue d'une utilisation du dosimètre (1), est doté d'un corps d'obturation (19) qui présente le même matériau que le corps de base (3).

2. Dosimètre (1) selon la revendication 1, **caractérisé en ce que**
l'élément de stockage, au nombre d'au moins un, est conçu en tant qu'élément passif et/ou
l'élément de stockage, au nombre d'au moins un, est un cristal inorganique et/ou un cristal thermoluminescent, en particulier LiF et/ou un détecteur de trace nucléaire, de préférence un haut polymère organique et/ou un verre inorganique et/ou un cristal organique.

3. Dosimètre (1) selon l'une des revendications précédentes, **caractérisé en ce que**
l'élément de stockage, au nombre d'au moins un, présente un semi-conducteur, de préférence du silicium.

4. Dosimètre (1) selon la revendication 1, **caractérisé en ce que**
le semi-conducteur présente un élément de stockage à état solide, de préférence un transistor MOSFET modifié.

5. Dosimètre (1) selon l'une des revendications précédentes, **caractérisé en ce que**
l'élément d'enregistrement, au nombre d'au moins un, présente des atomes ⁶Li et/ou ¹⁰B - disposés de préférence en une couche mince - et/ou **en ce que**
l'élément de stockage, au nombre d'au moins un, et l'élément d'enregistrement, au nombre d'au moins un, comportent des atomes à activer par capture de neutrons, de préférence de l'or et/ou de l'argent et/ou du cadmium.

6. Dosimètre (1) selon l'une des revendications précédentes, **caractérisé en ce que**
pour la détection d'un rayonnement neutronique dans des zones de rayonnement mixtes - présentant un rayonnement de photons, de neutrons et d'électrons -, l'élément de détection (5) comprend un élément de stockage et d'enregistrement comportant respectivement deux isotopes avec des sections actives de capture de neutrons qui diffèrent au moins de quelques ordres de grandeur, de préférence des atomes de ⁶Li et ⁷Li et/ou de ¹⁰B et ¹¹B et/ou des liaisons présentant ^{153,155,157}Gd et ^{156,160}Gd.

7. Dosimètre (1) selon la revendication 6, **caractérisé en ce que**
l'élément de stockage, au nombre d'au moins un, et/ou l'élément d'enregistrement comprend au moins un cristal ⁶LiF et au moins un cristal ⁷LiF et/ou des liaisons présentant des atomes ¹⁰B et ¹¹B.

8. Dosimètre (1) selon l'une des revendications précédentes, **caractérisé en ce que**
le corps de base (3) comporte une matière contenant de l'hydrogène, de préférence du polyéthylène (PE) et/ou du poly(méthacrylate de méthyle) (PMMA), et est de préférence constitué de cette matière.

9. Dosimètre (1) selon l'une des revendications précédentes, **caractérisé en ce que**
la taille du corps de base (3) et/ou l'épaisseur du convertisseur de neutrons (7) est/sont adaptée(s) au spectre d'énergie du rayonnement neutronique à détecter.

10. Dosimètre (1) selon l'une des revendications précédentes, **caractérisé en ce que**
le convertisseur de neutrons (7) est réalisé à la manière d'un cylindre ou sous la forme d'un cylindre.

11. Dosimètre (1) selon l'une des revendications précédentes, **caractérisé en ce que**
un absorbeur de neutrons (21) - de préférence disposé en une couche mince - comportant de préférence des atomes de bore et/ou de cadmium, est disposé entre le corps de base (3) et l'élément de détection (5), et/ou **en ce que**
l'absorbeur de neutrons (21) est disposé entre le corps de base (3) et le convertisseur de neutrons (7), ou **en ce que**
l'absorbeur de neutrons (21) est disposé entre le convertisseur de neutrons (7) et l'élément de détection (5).

12. Dosimètre (1) selon la revendication 11, **caractérisé en ce que**
l'absorbeur de neutrons (21) présente des trous.
